# EUROPEAN PATENT APPLICATION

(11) **EP 3 043 242 A1**
(43) Date of publication of application: **13.07.2016**
(21) Application number: 14841568.0
(22) Date of filing: 04.09.2014
(51) Int. Cl.: G06F 3/041, G06F 3/044

(54) **CAPACITIVE TOUCH PANEL**

(30) Priority: 06.09.2013 JP 2013185530
(71) Applicant: Dexerials Corporation, Tokyo 141-0032 (JP)
(72) Inventor: ODAGIRI, Hirokazu, Tokyo 141-0032 (JP); MURAKAMI, Yukio, Tokyo 141-0032 (JP); IMAMURA, Yoshiaki, Tokyo 141-0032 (JP); ONODERA, Yukihiro, Tokyo 141-0032 (JP); ISHIGAKI, Masato, Tokyo 141-0032 (JP); INOUE, Makoto, Tokyo 141-0032 (JP)
(74) Representative: Bates, Philip Ian
(86) International application number: PCT/JP2014/004562
(87) International publication number: WO 2015/033569

(57) **Abstract**

Thickness and weight are lowered while reducing warping and guaranteeing visibility of the screen. Included are a transparent panel substrate including a transparent resin base and a transparent resin layer formed on one surface of the transparent resin base; a decorative printing layer formed at an outer edge of a back surface of the transparent panel substrate; a warping prevention layer, formed to be flat and to cover the back surface of the transparent panel substrate inside the decorative printing layer and a back surface of the decorative printing layer; a transparent electrode layer formed on a back surface of the warping prevention layer; a jumper wiring layer formed on the transparent electrode layer and provided with an insulating layer; and a transparent protective layer formed on and entirely covering the jumper wiring layer except for a thermocompression bonding region of a substrate for external connection.

## Description

### CROSS-REFERENCE TO RELATED APPLICATION

This application claims priority to and the benefit of Japanese Patent Application No. 2013-185530 filed September 6, 2013, the entire contents of which are incorporated herein by reference.

### TECHNICAL FIELD

This disclosure relates to a capacitive touch panel, and in particular to a capacitive touch panel having a top plate that uses a transparent resin base.

### BACKGROUND

Smartphones and tablet PCs that can be easily operated with a touch panel have become widespread, and it has become a pressing issue to make touch panels thinner, lighter, and less expensive.

Touch panels use a variety of detection schemes, such as a resistive film scheme that overlays two resistive films to identify the instruction position and a surface acoustic wave scheme that generates ultrasonic waves or surface acoustic waves on the panel surface to detect the instruction position. The above-described touch panel used in a smartphone or tablet PC needs to correspond to complex operations with a high degree of freedom, such as tapping or dragging a finger on the panel, performing a pinch-out operation by spreading out two fingers on the screen to expand an image, or performing a pinch-in operation by bringing two fingers closer together. Therefore, currently the most common type of capacitive touch panel uses transparent electrodes to form an xy matrix and can simultaneously detect a plurality of instruction positions.

In an image display panel of a conventional electronic device or the like, or in a capacitive touch panel provided on the surface thereof, the region surrounding the image display region is treated as a decorative region and provided with a variety of designs in order to increase commercial value. Since a wiring pattern to electrically connect the transparent electrodes is formed in the surrounding region, however, unevenness corresponding to the shape of the wiring pattern may occur on the surface of the touch panel when forming the laminate. In this case, the desired flatness of the touch panel cannot be maintained, which detracts from the commercial value.

When decoration is applied to the panel substrate and optical double-sided tape is adhered thereto, air bubbles or an air layer may arise on the inside of the level difference occurring due to the decoration. Therefore, the panel substrate back surface is made smooth by packing ultraviolet curable resin so as to fill the level difference due to the decorative printing layer at the panel substrate back surface, thereby forming the panel substrate to be flat and smooth, without warping.

Furthermore, a variety of approaches have been considered to make touch panels thinner, lighter, and less expensive. Attempts are being made to switch from glass to resin material in a top plate disposed so as to cover the surface in order to protect the capacitive sheet in which the transparent electrodes are formed (for example, see JP 2000-207983 A (PTL 1)). Vigorous attempts are also being made to reduce both thickness and cost by reducing the number of capacitive sheets from two to one, for example by forming transparent electrodes on both sides of a film. For example, a capacitive touch panel in which a single lens substrate, a mask layer, and a sensor circuit are integrally formed has also been proposed (for example, see JP 5199913 B2 (PTL 2)).

### CITATION LIST

### Patent Literature

PTL 1: JP 2000-207983 A
PTL 2: JP 5199913 B2

### SUMMARY

### (Technical Problem)

When using a resin top plate in a capacitive touch panel, the touch panel and a liquid crystal panel in which the touch panel is mounted are exposed to a high temperature environment at the time of manufacturing. Therefore, a resin material with high heat resistance, such as polycarbonate (PC) resin, is typically used. The surface of the touch panel is also exposed to the outside environment and is easily scratched. Since PC resin has low hardness, flaws in terms of design and visibility occur if the surface of a top plate using PC resin is scratched. To address this problem, a multilayer structure is adopted, using rigid resin with a high hardness as the surface of the top plate. For example, a multilayer transparent resin base formed from PC resin and acrylic resin (polymethyl methacrylate resin, poly(methyl methacrylate), PMMA) using a co-extrusion formation technique has been developed.

The coefficient of linear expansion differs, however, between the PC resin that is the main base and the PMMA resin for surface protection. Therefore, in a base in which two layers, i.e. the PC resin and the PMMA resin, are formed, the entire top plate may warp due to a change in ambient temperature at the time of panel production or after mounting in a product.

It has also been proposed to adopt a resin top plate in the capacitive touch panel disclosed in PTL 2, but using a multilayer transparent resin base in the top plate leads to the problem of the top plate warping due to the ambient temperature.

In order to alleviate the warping of the base due to the difference in the coefficient of linear expansion of the top plate resin materials, PTL 1 discloses a technique to adhere a polyethylene terephthalate (PET) resin sheet to both sides of the PC resin. Since PET resin sheets need to be adhered to both sides of the main base using adhesive, however, the manufacturing process becomes complicated, and costs rise, including the cost of materials such as the adhesive. Therefore, instead of PET resin, a top plate base for a touch panel in which PMMA resin is integrally formed on both sides of PC resin, as described above, has become commercially available, but PMMA does not necessarily have high heat resistance. Furthermore, a special extrusion die is necessary to form a resin base with such a triple layer structure. The problems of reduced productivity and increased manufacturing costs thus remain.

For example, the coefficient of linear expansion of PC resin is 6.0 to 7.0 × 10⁻⁵/°C, the coefficient of linear expansion of PMMA resin is 5.0 to 9.0 × 10⁻⁵/°C, and the coefficient of linear expansion of PET resin is 1.5 to 2.0 × 10⁻⁵/°C. A capacitive touch panel with a resin top plate warps due to the coefficient of linear expansion differing between the top plate base (PC) and the transparent electrode film (PET) laminated thereon. This warping bends the LCD panel joined to the touch panel, which not only impairs image quality but also runs the risk of damaging the panel itself. Furthermore, laminating a film not only increases the total thickness and the weight of the touch panel but also causes an increase in the cost of materials and processing costs.

Therefore, it would be helpful to provide a high-quality capacitive touch panel that, while using a multilayer resin base to achieve a thinner, lighter touch panel, reduces warping caused by the difference in the coefficient of linear expansion of each resin layer and guarantees visibility of the screen.

### (Solution to Problem)

A capacitive touch panel according to an aspect of this disclosure includes a transparent panel substrate including a transparent resin base and a transparent resin layer, made from a different material, formed on one surface of the transparent resin base; a decorative printing layer formed at an outer edge of a back surface of the transparent panel substrate; a warping prevention layer, made of transparent resin material that has higher heat-resistant temperature characteristics than a thermocompression bonding temperature of a substrate for external connection, formed to be flat, to cover the back surface of the transparent panel substrate, on which the decorative printing layer is formed, inside the decorative printing layer, and to cover a back surface of the decorative printing layer; a transparent electrode layer formed on a back surface of the warping prevention layer; a jumper wiring layer formed on a back surface of the transparent electrode layer and provided with an insulating layer; and a transparent protective layer formed on and entirely covering a back surface of the jumper wiring layer except for a thermocompression bonding region of the substrate for external connection.

In the capacitive touch panel according to an aspect of this disclosure, the warping prevention layer may be made of an acrylic resin material with a heat-resistant temperature after curing of 140°C or higher.

In the capacitive touch panel according to an aspect of this disclosure, the transparent electrode layer may include nanowires or nanoparticles formed from any of silver, copper, or their alloys.

In the capacitive touch panel according to an aspect of this disclosure, at least one of the warping prevention layer and the transparent protective layer may be provided with a haze of 0.3% or greater by having minute resin beads mixed therein.

In the capacitive touch panel according to an aspect of this disclosure, the back surface of the warping prevention layer may have a flat surface transferred thereon by pressure treatment and may have a maximum unevenness of 0.1 µm or less.

### (Advantageous Effect)

According to this disclosure, since the warping prevention layer is formed to cover the other surface of the transparent resin base and the decorative printing layer, the level difference due to the decorative printing layer formed at the outer edge of the back surface of the transparent panel substrate can be eliminated, and when the transparent electrode layer is connected, a wiring disconnect due to this level difference can be prevented. Moreover, warping of the capacitive touch panel can be reduced. Furthermore, by forming the back surface of the warping prevention layer as a flat surface having a maximum unevenness of 0.1 µm or less, a high-quality capacitive touch panel in which surface roughness of the back surface of the warping prevention layer is not visible can be provided.

### BRIEF DESCRIPTION OF THE DRAWINGS

In the accompanying drawings:
FIGS. 1(A) and 1(B) illustrate the structure of a capacitive touch panel according to one of the embodiments of this disclosure, FIG. 1(A) being a front view of the capacitive touch panel, and FIG. 1(B) being a cross-sectional diagram along the AA' line in FIG. 1(A);
FIG. 2 is a flowchart illustrating an example of a manufacturing procedure for the capacitive touch panel;
FIGS. 3(A) and 3(B) illustrate the structure of a top plate forming part of a capacitive touch panel, FIG. 3(A) being a front view of the top plate, and FIG. 3(B) being a cross-sectional diagram along the AA' line in FIG. 3(A);
FIGS. 4(A), 4(B), and 4(C) are cross-sectional diagrams schematically illustrating the process of forming a top plate in the first step of the manufacturing procedure;
FIGS. 5(A), 5(B), and 5(C) are cross-sectional diagrams schematically illustrating the process of forming a top plate in the second through fifth steps of the manufacturing procedure;
FIG. 6 is a graph plotting measurement values of warping after applying heat stress to the top plate of the capacitive touch panel in an Example and a Conventional Example; and
FIGS. 7(A) and 7(B) are schematic diagrams illustrating the warping direction of the top plate.

### DETAILED DESCRIPTION

The following describes embodiments of this disclosure in detail with reference to the drawings. It should be noted that this disclosure is not limited only to the following embodiments, and various modifications may of course be made without deviating from the scope of this disclosure. Furthermore, the dimensions of each component in the drawings are schematic. In particular, the dimensions in the thickness direction are emphasized in the cross-sectional diagrams in order to clarify the structures.

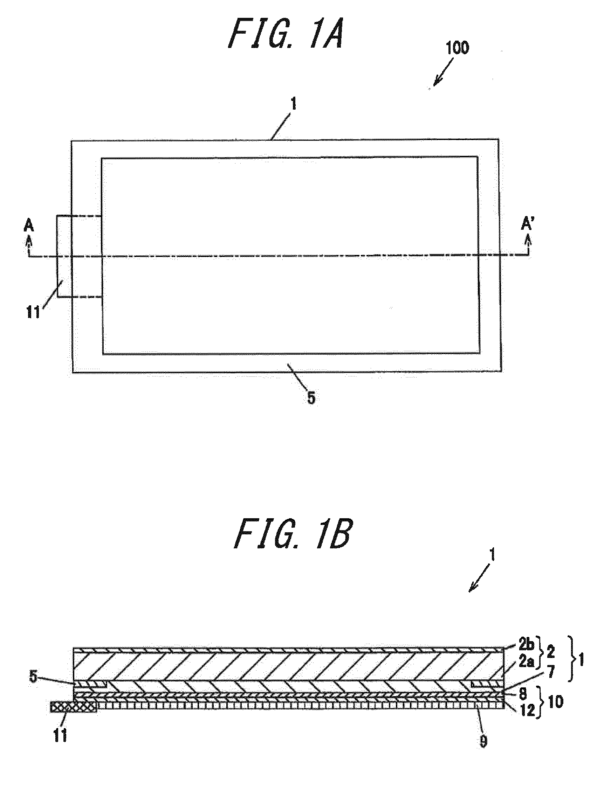

FIGS. 1(A) and 1(B) illustrate a structural example of a capacitive touch panel 100 according to one of the disclosed embodiments, FIG. 1(A) being a front view of the capacitive touch panel 100, and FIG. 1(B) being a cross-sectional diagram along the AA' line in FIG. 1(A).

In other words, the capacitive touch panel 100 to which this disclosure is applied includes a top plate 1 which is the upper structure and a sensor 10 that is disposed on the back surface of the top plate 1 and is formed by a transparent electrode layer 8 and a jumper wiring layer 12 provided with an insulating layer.

As illustrated in FIG. 1(B), the top plate 1 includes a transparent panel substrate 2, a decorative printing layer 5, and a warping prevention layer 7. The transparent panel substrate 2 is provided with a transparent resin base 2a that includes resin material with a high heat resistance and a transparent resin layer 2b that includes rigid resin material with a high hardness and is formed on one surface, specifically the front surface, of the transparent resin base 2a. The decorative printing layer 5 is formed at the outer edge of the other surface, specifically the back surface, of the transparent resin base 2a. The warping prevention layer 7 is formed to cover the decorative printing layer 5 and the back surface of the top plate 1.

The transparent resin base 2a is preferably formed with PC resin, which is a resin material having a high heat resistance, and the transparent resin layer 2b is preferably formed with PMMA resin, which is a rigid resin material with a high hardness. In general, the ease with which the surface of a touch panel scratches is evaluated by pencil hardness (scratch hardness test, JIS K 5600). PC resin as a single base has a surface hardness of HB to H and easily scratches. Conversely, PMMA resin has a surface hardness of 3H to 5H and is preferred as a material for the surface of a touch panel. Forming the transparent resin layer 2b constituted by PMMA resin or the like on one surface of the transparent resin base 2a constituted by PC resin or the like, specifically on the front surface of the capacitive touch panel 100, yields a touch panel that does not scratch easily.

The transparent panel substrate 2 constituted by the transparent resin base 2a with the transparent resin layer 2b formed on the surface thereof is formed by simultaneous fusion molding using two types of resin material.

The decorative printing layer 5 is a layer formed for the purpose of covering a frame region so as not to be visible from the outside. The frame region is a region at the outer edge of a liquid crystal screen in a smartphone, tablet, or the like, in which electrodes, wiring, and the like necessary for functioning of the touch panel are formed. The decorative printing layer 5 is formed by silkscreen printing to yield multiple layers of repeatedly coated colored ink. In order to apply a predetermined thickness so that the electrodes, wiring, and the like formed in the frame region are not visible, a multilayer printing layer needs to be formed by several applications of a thin application layer, since a thick layer applied only once tends not to be uniform. For example, in the case of ink with a deep color that does not easily transmit light, the printing layer is formed by two applications, and in the case of ink with a pale color (such as white) that easily transmits light, approximately four applications are required. When the thickness per application is approximately 8 µm, a layer of pale ink has a thickness of approximately 32 µm.

The warping prevention layer 7 is formed to be flat and entirely cover the back surface of the transparent resin base 2a and the decorative printing layer 5. In the warping prevention layer 7, a resin material with a coefficient of linear expansion nearly equivalent to the coefficient of linear expansion of the material used in the transparent resin layer 2b formed on the front surface of the transparent resin base 2a is preferably used. Any material may be used in the warping prevention layer 7, such as transparent acrylic resin coating material used in ultraviolet curable ink and heat-curable ink, urethane resin coating material, or the like. In greater detail, a coating material containing urethane (meth)acrylate, epoxy (meth)acrylate, polyester (meth)acrylate, polyester urethane (meth)acrylate, polyether (meth)acrylate, polycarbonate (meth)acrylate, polycarbonate urethane (meth)acrylate, or the like may be used. So as not to affect the optical characteristics of the touch panel, the haze, which is the proportion of diffusely transmitted light among all transmitted light, more preferably does not exceed 1%. Using a transparent acrylic or urethane resin coating material or the like with low viscosity allows the level difference occurring between the decorative printing layer 5 and the transparent resin base 2a to be nearly flattened out, and when the transparent electrode layer 8 is connected, a wiring disconnect due to this level difference can be prevented. As described above, when performing decorative printing with a pale ink, the decorative printing layer 5 has a thickness of approximately 32 µm. Therefore, it suffices to form the warping prevention layer 7 by applying acrylic coating material across the decorative printing layer 5 and the back surface of the transparent resin base 2a to a thickness of, for example, approximately 35 µm. Besides silkscreen printing, another way of applying the acrylic coating material that forms the warping prevention layer 7 is direct application with a die coater. A known application technique may thus be used to form the warping prevention layer 7. Hence, the same equipment used in the printing process for the decorative printing layer 5 may be used, without the need to install special equipment, thereby allowing a reduction in manufacturing costs.

In this way, the warping prevention layer 7 formed to be flat and entirely cover the back surface of the transparent resin base 2a and the decorative printing layer 5 is for preventing warping, due to ambient temperature, in the transparent panel substrate 2 that has a double layer structure constituted by the transparent resin layer 2b and the transparent resin base 2a, which are formed with two types of resin material. The warping prevention layer 7 also functions, however, as a flattening layer that nearly flattens out the level difference occurring between the decorative printing layer 5 and the transparent resin base 2a and that prevents a wiring disconnect due to this level difference when the transparent electrode layer 8 is connected.

The transparent electrode layer 8 formed below the warping prevention layer 7 is a layer in which transparent electrodes are formed on a transparent film and may include nanowires or nanoparticles formed from any of silver, copper, or their alloys. In the case of a capacitive touch panel, in order to identify the xy coordinates of a touch position, a transparent electrode film with a double layer structure, in which electrodes in the x-axis direction and electrodes in the y-axis direction are formed in two films, is generally used. The transparent electrode layer 8 may be a single layer, however, by adopting a multilayer structure constituted by a transparent electrode layer 8 that uses Ag nanowires and jumper wiring for identifying the xy coordinates of the transparent electrodes. By using a single layer for the transparent electrode layer 8, the thickness and the weight of the capacitive touch panel 100 can be reduced, and the number of manufacturing processes can be reduced, thereby allowing a reduction in manufacturing costs. Furthermore, by using an Ag nanowire film, the double layer sensor structure composed of two ITO films that is typically used can be replaced with a single layer structure that is thinner, thus contributing to making the touch panel even thinner and lighter.

In order to protect the jumper wiring layer 12 that is provided with an insulating layer, a transparent protective layer 9 is formed on the back surface of the jumper wiring layer 12 so as entirely to cover the surface thereof, except for a thermocompression bonding region of a flexible printed circuit 11 for external connection, and the flexible printed circuit 11 for connecting to an external circuit is connected to the back surface of the jumper wiring layer 12. A known material may be used in the transparent protective layer 9, which for example may be formed by applying heat-curable acrylic resin.

In this way, the top plate 1 used in the capacitive touch panel 100 to which this disclosure is applied includes the transparent panel substrate 2 constituted by the transparent resin base 2a and the transparent resin layer 2b, made from a different material, formed on one surface of the transparent resin base 2a; the decorative printing layer 5 formed at an outer edge of a back surface of the transparent panel substrate 2; the warping prevention layer 7, made of transparent resin material having higher heat-resistant temperature characteristics than a thermocompression bonding temperature of the flexible printed circuit 11, formed to be flat and to cover the back surface of the transparent panel substrate 2, on which the decorative printing layer 5 is formed, inside the decorative printing layer 5, and a back surface of the decorative printing layer 5; the transparent electrode layer 8 formed on a back surface of the warping prevention layer 7; the jumper wiring layer 12 provided with an insulating layer and formed on a back surface of the transparent electrode layer 8; and the transparent protective layer 9 formed on the jumper wiring layer 12.

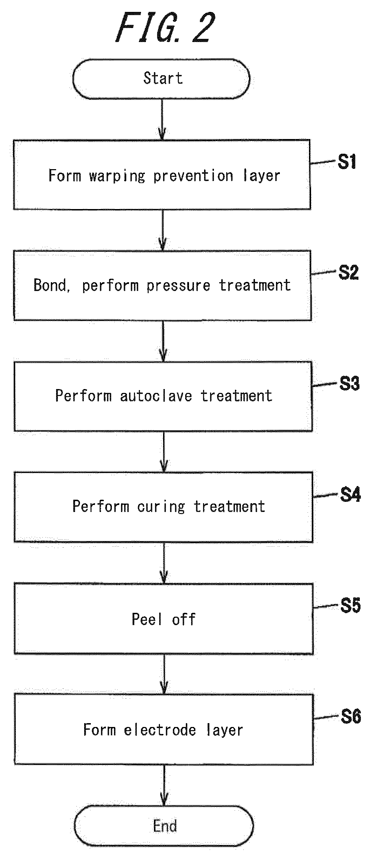

This capacitive touch panel 100 is manufactured by, for example, performing first through sixth steps (S1 to S6) in accordance with the procedure illustrated in the flowchart of FIG. 2.

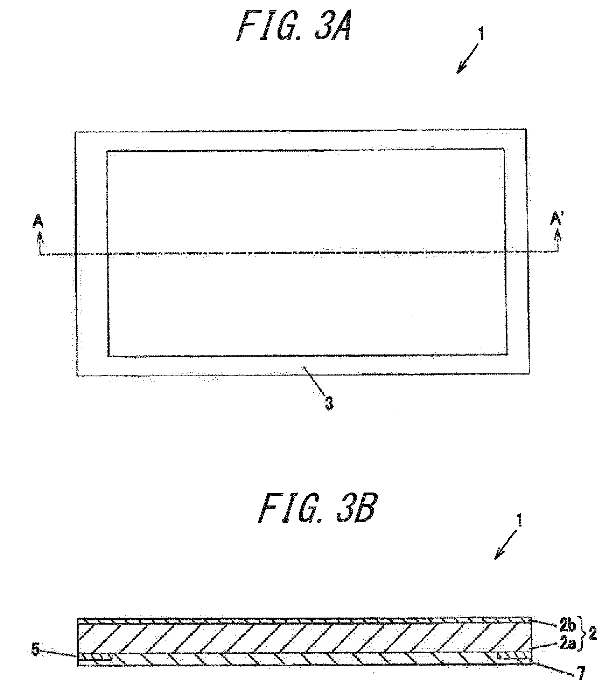

In the first step S1, the decorative printing layer 5 is formed on the flexible transparent panel substrate 2, and the warping prevention layer 7 is formed on the inside of the level difference due to the decorative printing layer 5 on the back surface of the transparent panel substrate 2 and on the back surface of the decorative printing layer 5. In the second step S2, pressure treatment is applied to the warping prevention layer 7 in a state such that the back surface of the warping prevention layer 7 and the flat surface of a flat substrate 30 are bonded together. In the third step S3, autoclave treatment is further applied to the warping prevention layer 7 that was subjected to pressure treatment. In the fourth step S4, the warping prevention layer 7 that was subjected to autoclave treatment is cured. In the fifth step S5, the flat substrate 30 is peeled off the cured warping prevention layer 7, thereby forming the top plate 1 with the structure illustrated in FIGS. 3(A) and 3(B), which includes the transparent panel substrate 2, the decorative printing layer 5, and the warping prevention layer 7. FIG. 3(A) is a front view of the top plate 1, and FIG. 3(B) is a cross-sectional diagram along the AA' line in FIG. 3(A).

In the sixth step S6, the capacitive touch panel 100 is completed by forming the sensor 10 on the back surface of the warping prevention layer 7 of the top plate 1. The sensor 10 includes the transparent electrode layer 8 and the jumper wiring layer 12 provided with an insulating layer.

In other words, in the first step S1, the decorative printing layer 5 is formed along the perimeter of the flexible transparent panel substrate 2, and the warping prevention layer 7 is formed on the inside of the level difference due to the decorative printing layer 5 on the back surface of the transparent panel substrate 2 and on the back surface of the decorative printing layer 5.

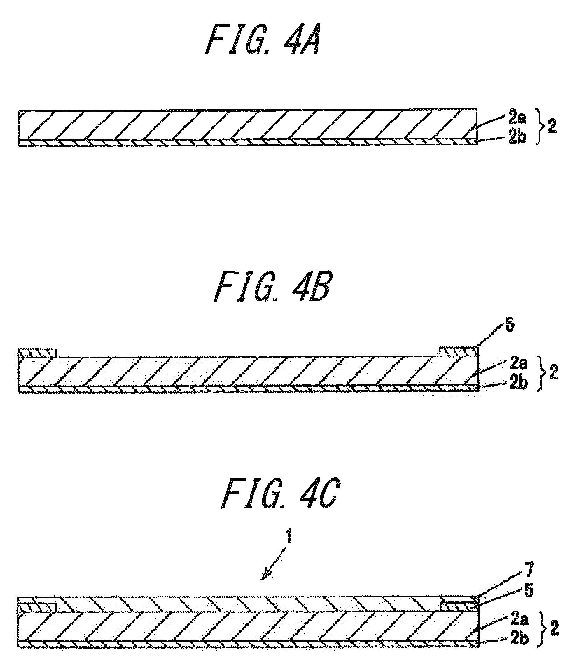

Specifically, in the first step S1, in the peripheral region on the back surface of the transparent panel substrate 2 illustrated in FIG. 4(A), the decorative printing layer 5 is formed as illustrated in FIG. 4(B). The warping prevention layer 7 is then formed on the transparent panel substrate 2 by printing ultraviolet curable resin, as illustrated in FIG. 4(C), across the entire inside of the level difference due to the decorative printing layer 5 on the back surface of the transparent panel substrate 2 and across the back surface of the decorative printing layer 5, thereby forming the top plate 1 that includes the transparent panel substrate 2, the decorative printing layer 5, and the warping prevention layer 7.

Here, the decorative printing layer 5 is a layer formed for the purpose of covering the frame region so as not to be visible from the outside. The frame region is a region formed at the outer edge of a liquid crystal screen in a smartphone, tablet, or the like, in which electrodes, wiring, and the like necessary for functioning of the touch panel are formed. The decorative printing layer 5 is, for example, formed by silkscreen printing to yield multiple layers of repeatedly coated colored ink. In order to apply a predetermined thickness so that the electrodes, wiring, and the like formed in the frame region are not visible, a multilayer printing layer needs to be formed by several applications of a thin application layer, since a thick layer applied only once tends not to be uniform. For example, in the case of ink with a deep color that does not easily transmit light, the printing layer is formed by two applications, and in the case of ink with a pale color (such as white) that easily transmits light, approximately four applications are required. When the thickness per application is approximately 8 µm, a layer of pale ink has a thickness of approximately 32 µm.

Next, in the second step S2, pressure treatment is applied to the warping prevention layer 7 in a state such that the back surface of the warping prevention layer 7 and the flat surface of the flat substrate 30 are bonded together.

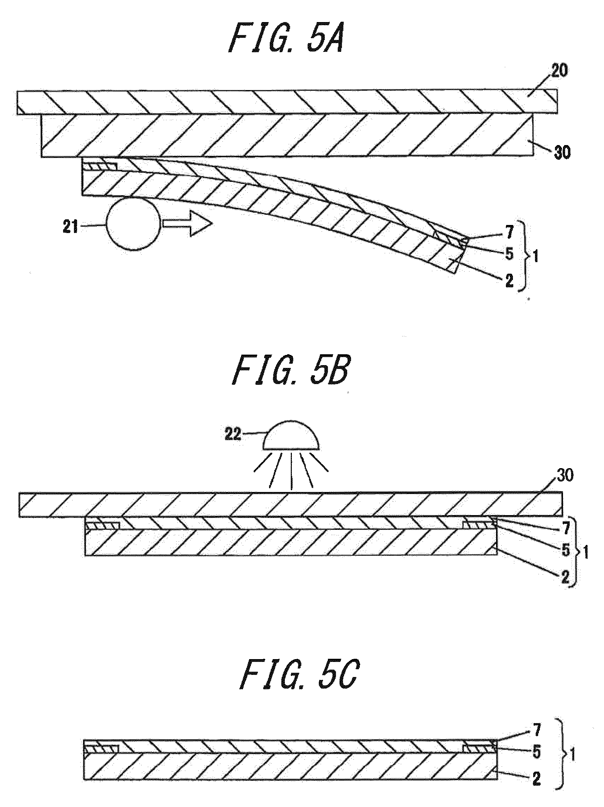

Specifically, in the second step S2, for example a glass plate as the flat substrate 30 is adsorbed on an upper board 20 provided with a suction function, as illustrated in FIG. 5(A). A bonding device is used to sandwich the top plate 1 between the flat substrate 30 and a roller 21 and to roll the roller 21 in the direction of the arrow, thereby bonding the flat substrate 30 and the top plate 1. Pressure treatment is thus applied to the warping prevention layer 7 with the roller 21 from the transparent panel substrate 2 side.

In this way, pressure treatment is applied to the warping prevention layer 7 with the roller 21 from the transparent panel substrate 2 side to bond the flat substrate 30 to the warping prevention layer 7. The flat surface of the flat substrate 30 is thus transferred to the back surface of the warping prevention layer 7, so that the back surface of the warping prevention layer 7 becomes a flat surface for example having the surface accuracy, i.e. the flatness, surface roughness, and the like, of a glass plate. The warping prevention layer 7 may be formed to have a back surface that is a flat surface transferred by pressure treatment and having a maximum unevenness of 0.1 µm or less.

When pressure treatment is applied to the warping prevention layer 7 with the roller 21 from the transparent panel substrate 2 side to bond the flat substrate 30 to the back surface of the warping prevention layer 7, air bubbles remaining at the level difference portion due to the decorative printing layer 5 in the top plate 1 can be reduced by setting the rolling speed of the roller 21 to a predetermined constant speed.

Next, in the third step S3, autoclave treatment is further applied to the warping prevention layer 7 of the top plate 1 that was subjected to pressure treatment.

Specifically, in the third step S3, suction of the flat substrate 30 by the upper board 20 is suspended. The top plate 1 is removed from the upper board 20 along with the flat substrate 30, placed in an autoclave pressure vessel, and subjected to autoclave treatment.

The air bubbles remaining in the level difference portion due to the decorative printing layer 5 in the top plate 1 to which pressure treatment has been applied can be further reduced by the application of autoclave treatment, and air bubbles remaining in the image display region on the inside of the decorative printing layer 5 can be eliminated.

Next, in the fourth step S4, the warping prevention layer 7 of the top plate 1 that was subjected to autoclave treatment is cured.

Specifically, in the fourth step S4, as illustrated in FIG. 5(B), the warping prevention layer 7 of the top plate 1 that was subjected to the pressure treatment and the autoclave treatment is irradiated with ultraviolet light from the flat substrate 30 side with an ultraviolet light source 22 to cure the warping prevention layer 7.

By using a transparent glass plate with high transmittance of ultraviolet light in the flat substrate 30, the warping prevention layer 7 can be cured efficiently by irradiation with ultraviolet light from the flat substrate 30 side.

Instead of the glass plate, for example a polycarbonate base or an acrylic resin base that transmits ultraviolet light and has been subjected to release treatment may be used in the flat substrate 30.

In the fifth step S5, the flat substrate 30 is peeled off the cured warping prevention layer 7.

So that the flat substrate 30 easily peels off the cured warping prevention layer 7, for example the substrate material is preferably a glass plate with the thickness of 0.5 mm to 2 mm or less and has preferably been subjected to release treatment by applying a water repellent or a release agent to the surface thereof.

In this way, the top plate 1 with the structure illustrated in FIGS. 3(A) and 3(B) is produced by the process from the first through fifth steps (S1 to S5).

The warping prevention layer 7 is made of transparent resin material that has higher heat-resistant temperature characteristics than the thermocompression bonding temperature of the flexible printed circuit 11, such as an acrylic resin material with a heat-resistant temperature after curing of 140°C or higher.

Next, in the sixth step S6, by forming the sensor 10 on the back surface of the warping prevention layer 7 of the top plate 1, the capacitive touch panel 100 is completed.

In the sensor 10, in order to protect the jumper wiring layer 12 that is provided with an insulating layer, the transparent protective layer 9 is formed on the back surface of the jumper wiring layer 12, and the flexible printed circuit 11 for connecting to an external circuit is connected to the back surface of the jumper wiring layer 12. A known material may be used in the transparent protective layer 9, which for example may be formed by applying heat-curable or UV-curable acrylic resin.

Minute resin beads may be mixed into at least one of the warping prevention layer 7 and the transparent protective layer 9 so as to provide a haze of 0.3% or greater.

The occurrence of warping, under a high temperature environment, in capacitive touch panels 100 to which this disclosure was applied and the occurrence of warping in a Conventional Example were measured.

The capacitive touch panel samples produced as described below were conserved for 240 hours in a hot-air constant-temperature oven set to 70°C. Subsequently, the capacitive touch panel samples were removed, and warping at both edges of the capacitive touch panel samples after the lapse of predetermined lengths of time at room temperature was measured. The predetermined lengths of time were immediately after removal from the oven, after five minutes, and after one hour.

### [Conventional Example]

Capacitive touch panel sample of Conventional Example used for measurement of warping
Resin top plate base: PC resin + PMMA resin material (MRS58W, 297 mm × 210 mm × 0.8 mm, produced by Mitsubishi Gas Chemical)
Decorative printing layer: MRX-HF919 black (produced by Teikoku Printing Inks Mfg.)
Optical adhesive: MHM-FW50 (produced by Nichiei Kakoh)
ITO-PET: V150A-OFSD5 (produced by Nitto Denko)

### [Example 1]

Capacitive touch panel sample used for measurement of warping
Resin top plate base: PC resin + PMMA resin material (MRS58W, 297 mm × 210 mm × 0.8 mm, produced by Mitsubishi Gas Chemical)
Decorative printing layer: MRX-HF919 black (produced by Teikoku Printing Inks Mfg.)
Warping prevention layer: RL-9262 (produced by Sanyu Rec)
Transparent electrode layer: Silver nanowire ink
Insulating layer: TPAR-P1510PM (produced by Tokyo Ohka Kogyo)
Transparent resin coating material: FR-1TNSD9 (produced by Asahi Chemical Research Laboratory)
Filler: Chemisnow MR-3GSN (average particle size of 3 µm, produced by Soken Chemical & Engineering)

The sample of Example 1 was produced as follows.

The resin top plate base (MRS58W, 297 mm × 210 mm × 0.8 mm, produced by Mitsubishi Gas Chemical) was subjected to silkscreen printing (mesh #200) using MRX-HF919 black (produced by Teikoku Printing Inks Mfg.) and then dried and cured for one hour at 80°C to form a decorative printing layer with a thickness of 8 µm. Subsequently, after Corona treatment over the entire back surface of the resin top plate including the portion where the decorative printing layer was formed, 0.2 parts by weight of transparent resin filler (MR-3GSN) were dispersed per 100 parts by weight of transparent ink (RL-9262), and the resulting material was used to perform silkscreen printing (mesh #200) on the decorative printing layer to form a warping prevention layer over the entire back surface of the resin top plate including the decorative printing layer. The thickness of the warping prevention layer at this time was approximately 12 µm. After applying coating material including silver nanowires with a bar coater to form a first transparent electrode layer, an insulating layer and jumper wires (silver nanowires) were disposed to form a second transparent electrode layer. Subsequently, transparent resin material (FR-1TNSD9) was applied over the entire transparent electrode layer to form a transparent protective layer.

The prepared capacitive touch panel sample was then conserved for 240 hours in a hot-air constant-temperature oven at 70°C, and the warping of the base upon removal was measured.

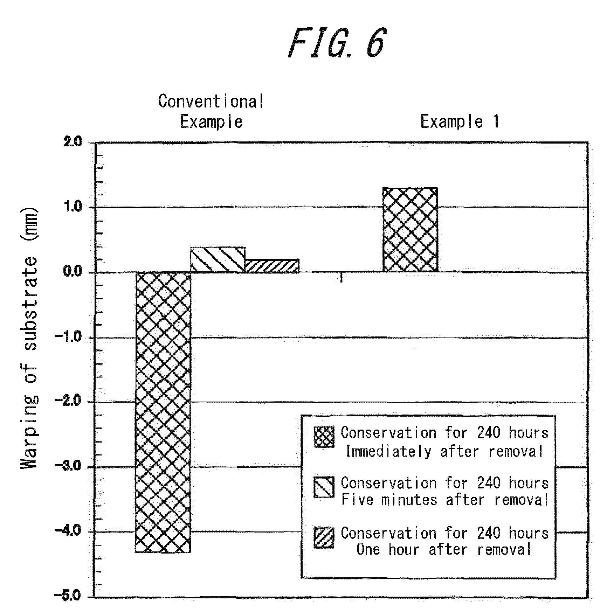

The measurement results are illustrated in FIG. 6 and in Table 1 below.

[Table 1]

**Table 1: Warping at time of heating to 70°C and conserving**

| | Initial stage mm | 70°C, conservation for 240 hours, time after removal, mm | | |
|---|---|---|---|---|
| | | immediately after | 5 minutes | 1 hour |
| Conventional Example | 0.3 | -4.3 | 0.4 | 0.2 |
| Example 1 | 0 | 1.3 | 0.0 | 0.0 |

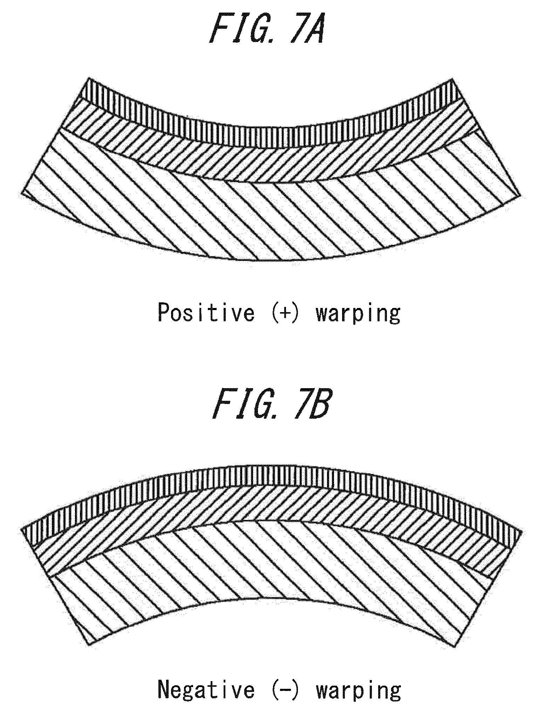

The vertical axis in the graph in FIG. 6 indicates the amount of warping of the base. The sign of the warping is as illustrated in FIGS. 7A and 7B.

The bar graph indicates the length of time elapsed for the warping: immediately after removal from the state of conservation, and the values measured after sitting at room temperature for five minutes and for one hour. The sample to the left is the capacitive touch panel sample of the Conventional Example, and the sample to the right is the capacitive touch panel sample of Example 1.

As is clear from the measurement results in FIG. 6, in particular the warping immediately after removal was reduced in Example 1 of this disclosure to approximately one fourth of the amount of warping of the Conventional Example.

### [Example 2]

Capacitive touch panel sample used for measurement of haze (degree of cloudiness) of warping prevention layer and visibility of transparent electrode layer
Resin top plate base: PC resin + PMMA resin material (MRS58W, 297 mm × 210 mm × 0.8 mm, produced by Mitsubishi Gas Chemical)
Decorative printing layer: MRX-HF919 black (produced by Teikoku Printing Inks Mfg.)
Warping prevention layer: RL-9262 (produced by Sanyu Rec)
Transparent electrode layer: Silver nanowire ink
Insulating layer: TPAR-P1510PM (produced by Asahi Chemical Research Laboratory)
Transparent resin filler: Chemisnow MR-20G (average particle size of 20 µm, produced by Soken Chemical & Engineering)

The capacitive touch panel sample was prepared in a similar way to Example 1, except for using MR-20G (average particle size of 20 µm, Soken Chemical & Engineering) as the transparent resin filler mixed into the transparent ink forming the warping prevention layer and dispersing 10 parts by weight of the transparent resin filler per 100 parts by weight of the transparent ink.

### [Example 3]

Capacitive touch panel sample used for measurement of haze (degree of cloudiness) of warping prevention layer and visibility of transparent electrode layer
Resin top plate base: PC resin + PMMA resin material (MRS58W, 297 mm × 210 mm × 0.8 mm, produced by Mitsubishi Gas Chemical)
Decorative printing layer: MRX-HF919 black (produced by Teikoku Printing Inks Mfg.)
Warping prevention layer: RL-9262 (produced by Sanyu Rec)
Transparent electrode layer: Silver nanowire ink
Insulating layer: TPAR-P1510PM (produced by Asahi Chemical Research Laboratory)
Transparent resin filler: Chemisnow MR-10G (average particle size of 9 µm, produced by Soken Chemical & Engineering)

The capacitive touch panel sample was prepared in a similar way to Example 1, except for using MR-10G (average particle size of 9 µm, Soken Chemical & Engineering) as the transparent resin filler mixed into the transparent ink forming the warping prevention layer and dispersing 1 part by weight of the transparent resin filler per 100 parts by weight of the transparent ink.

### [Comparative Example]

Capacitive touch panel sample used for measurement of haze (degree of cloudiness) of warping prevention layer and visibility of transparent electrode layer
Resin top plate base: PC resin + PMMA resin material (MRS58W, 297 mm × 210 mm × 0.8 mm, produced by Mitsubishi Gas Chemical)
Decorative printing layer: MRX-HF919 black (produced by Teikoku Printing Inks Mfg.)
Warping prevention layer: RL-9262 (produced by Sanyu Rec)
Transparent electrode layer: Silver nanowire ink
Insulating layer: TPAR-P1510PM (produced by Asahi Chemical Research Laboratory)

The capacitive touch panel sample was prepared in a similar way to Example 1, except for not mixing transparent resin filler into the transparent ink forming the warping prevention layer.

Table 2 below shows the results of measuring haze (degree of cloudiness) of the warping prevention layer and visibility of the transparent electrode layer for Examples 1 to 3 and the Comparative Example.

[Table 2]

**Table 2: Haze (degree of cloudiness) of warping prevention layer and visibility of transparent electrodes**

| | Transparent resin filler | | % of haze (degree of cloudiness) | Visibility of transparent conductive layer |
|---|---|---|---|---|
| | average particle size µm | parts by weight | | |
| Example 1 | 3 | 0.2 | 0.3 | not visible |
| Example 2 | 20 | 10 | 4.9 | not visible |
| Example 3 | 9 | 1 | 2.1 | not visible |
| Comparative Example | none | | 0.18 | visible |

The transparent electrode layer is formed from silver nanowire ink, and the reflectance of incident light from the resin top plate surface differs between the electrode portion, which contains silver nanowires, and the insulating portion, which does not. Therefore, the electrode portion becomes visible. It is clear that when the haze of the warping prevention layer is 0.3% or greater, as in Examples 1 to 3, the transparent electrode layer formed thereon is not visible.

Table 3 below lists the results of measuring visibility of the compression mark from thermal deformation of the base due to the compression jig when the substrate for external connection, i.e. the Flexible Printed Circuit (FPC) 11, was subjected to thermocompression bonding.

[Table 3]

**Table 3: Visibility of deformation in FPC thermocompressed portion**

| Base name | Thickness mm | Deformation of thermocompressed portion (conditions: 150°C, 10 s) | Notes |
|---|---|---|---|
| Example 1 | 0.8 | good | two-type, two-layer product |
| PMMA | 1 | poor | Comparative Example: single-layer product |
| PMMA/PC /PMMA | 0.8 | average | Comparative Example: two-type, three-layer product |

The temperature of the compression jig was 150°C, the pressure was approximately 4 MPa, and the compression time was 10 s. As comparative examples, touch panels were prepared to have a similar structure to that of Example 1, except for using the below-described bases and not forming a warping prevention layer.

PMMA: single-layer base (product name: CLAREX 1.0 mm, produced by Nitto Jushi Kogyo)
PMMA/PC/PMMA: two-type, three-layer base (product name: HARZLAS HI-HA IV 0.8 mm, Fukuvi Chemical Industry)

The portion contacted by the FPC thermocompression jig was the warping prevention layer (UV curable acrylic resin) in Example 1 and the PMMA resin layer in the PMMA (single layer) and PMMA/PC/PMMA (two type, three layer) of the Comparative Examples. The heat resistance of these contacted portions was affected by the state of thermal deformation.

As is clear from the results in Table 3, the warping prevention layer of Example 1 has sufficient heat resistance, no deformation occurs at the compressed portion of the FPC, and the compression mark is not visible from the resin top plate surface. Accordingly, a good resin top plate can be provided as the touch panel of this disclosure.

### REFERENCE SIGNS LIST

- 1: Top plate
- 2a: Transparent resin base
- 2b: Transparent resin layer
- 2: Transparent panel substrate
- 5: Decorative printing layer
- 7: Warping prevention layer
- 8: Transparent electrode layer
- 9: Transparent protective layer
- 10: Sensor
- 100: Capacitive touch panel
- 11: Flexible printed circuit
- 12: Jumper wiring layer provided with an insulating layer

## Claims

1. A capacitive touch panel comprising:
a transparent panel substrate including a transparent resin base and a transparent resin layer, made from a different material, formed on one surface of the transparent resin base;
a decorative printing layer formed at an outer edge of a back surface of the transparent panel substrate;
a warping prevention layer, made of transparent resin material that has higher heat-resistant temperature characteristics than a thermocompression bonding temperature of a substrate for external connection, formed to be flat and to cover the back surface of the transparent panel substrate, on which the decorative printing layer is formed, inside the decorative printing layer and a back surface of the decorative printing layer;
a transparent electrode layer formed on a back surface of the warping prevention layer;
a jumper wiring layer formed on a back surface of the transparent electrode layer and provided with an insulating layer; and
a transparent protective layer formed on and entirely covering a back surface of the jumper wiring layer except for a thermocompression bonding region of the substrate for external connection.

2. The capacitive touch panel of claim 1, wherein the warping prevention layer is made of an acrylic resin material with a heat-resistant temperature after curing of 140°C or higher.

3. The capacitive touch panel of claim 1, wherein the transparent electrode layer includes nanowires or nanoparticles formed from any of silver, copper, or their alloys.

4. The capacitive touch panel of claim 1, wherein at least one of the warping prevention layer and the transparent protective layer is provided with a haze of 0.3% or greater by having minute resin beads mixed therein.

5. The capacitive touch panel of claim 1, wherein the back surface of the warping prevention layer has a flat surface transferred thereon by pressure treatment and has a maximum unevenness of 0.1 µm or less.
